# EUROPÄISCHE PATENTSCHRIFT

(11) **EP 4 505 117 B1**
(45) Veröffentlichungstag und Bekanntmachung des Hinweises auf die Patenterteilung: **25.11.2026**
(21) Anmeldenummer: 23712183.5
(22) Anmeldetag: 14.03.2023
(51) Int. Cl.: F24D 3/10

(54) **AUSDEHNUNGSVORRICHTUNG**
EXPANSION DEVICE
DISPOSITIF DE DÉTENTE

(30) Priorität: 02.04.2022 DE 102022001144
(43) Veröffentlichungstag der Anmeldung: 12.02.2025
(73) Patentinhaber: Hydac Technology GmbH, 66280 Sulzbach (DE)
(72) Erfinder: KLOFT, Peter, 56235 Ransbach-Baumbach (DE); KÖHNE, Jens Holger, 66123 Saarbrücken (DE); MÜLLER-TÖNNISSEN, Lars, 40627 Düsseldorf (DE)
(74) Vertreter: Bartels und Partner, Patentanwälte
(86) Internationale Anmeldenummer: PCT/EP2023/056484
(87) Internationale Veröffentlichungsnummer: WO 2023/186528

(56) Entgegenhaltungen:
- EP-A1- 0 790 411
- EP-A1- 3 351 860
- EP-A2- 1 517 048
- EP-A2- 1 582 820
- US-A1- 2019 085 536

## Beschreibung

Die Erfindung betrifft eine Ausdehnungsvorrichtung mit den Merkmalen im Oberbegriff von Anspruch 1.

Durch DE 43 02 356 C2 ist eine Sicherheitsgruppe mit einem Ausdehnungsgefäß zum Einbau in eine Kaltwasserleitung bekannt, die an einen druckfesten Warmwasserbereiter angeschlossen ist, wobei das Ausdehnungsgefäß eine Membran und ein Rohrstück aufweist, auf dessen Eingangsseite ein Rückflussverhinderer und stromabwärts ein Sicherheitsventil angeordnet sind. Das Rohrstück ist mit Durchbrüchen versehen und die Membran des Ausdehnungsgefäßes besteht aus einem flexiblen Schlauch, der auf das Rohrstück aufgezogen und von einem Druckspeichergehäuse umgeben ist, das über einen Anschluss mit einem Gas, wie beispielsweise Stickstoff, unter vorgebbarem Druck befüllt ist.

Durch EP 0 943 872 A2 ist ein kombiniertes Brauch- und Heizwasserausdehnungsgefäß bekannt zwecks Aufnahme temperaturschwankungsbedingter Volumenänderungen im Betrieb dahingehender Systeme. Das Ausdehnungsgefäß ist dabei von einer elastischen Membran in einen druckbeaufschlagten Druckgasraum und einen Wasserraum getrennt, der über Anschlüsse mit einem Wassersystem verbunden ist, wobei ein Brauchwasserraum und ein Heizungswasserraum in dem gemeinsamen Gefäß integriert sind. Dergestalt ist ein Brauchwasserausdehnungsgefäß sowie ein Heizwasserausdehnungsgefäß gebildet, die mit unterschiedlichen Drücken beaufschlagbar sind und das Brauchwasserausdehnungsgefäß besteht aus dem eigentlichen Brauchwasserraum sowie einem weiteren Druckgasraum, der über ein Füllventil mit einem Druckgas vorgebbaren Druckes befüllbar ist.

Da die bekannten Ausdehnungsgefäße fortlaufend einem relevanten Betriebsdruck ausgesetzt sind, gebildet durch das jeweils in einem abgeschlossenen Raum aufgenommene Arbeitsgas, unterliegen sie der europäischen Druckgeräterichtlinie, die in Deutschland im Rahmen der Druckgeräteverordnung umgesetzt wurde. Unter die dahingehende Verordnung fallen bereits Druckbehälter, sofern sie mit einem maximal zulässigen Druck von über 0,5 bar betrieben werden, was zur Folge hat, dass diese in gewissen zeitlichen Abständen einer inneren Prüfung respektive Sichtprüfung unterliegen, und in größeren zeitlichen Abständen ist jedenfalls eine Festigkeitsprüfung, auch Druckprüfung genannt, durchzuführen, was entsprechend zeit- und kostenintensiv ist, und ferner müssen die Überwachungszeiträume für deren Einhaltung überwacht werden.

Die EP 1 517 048 A2 beschreibt eine Ausdehnungsvorrichtung mit den Merkmalen im Oberbegriff von Anspruch 1 mit einem Ausdehnungsgehäuse, das eine Trennmembran aufweist, die das Ausdehnungsgehäuse in zwei Medienräume voneinander separiert, von denen ein Medienraum über einen Flüssigkeitsanschluss im Ausdehnungsgehäuse mit Flüssigkeit befüllbar ist, wobei der andere Medienraum über mindestens eine Öffnung im Ausdehnungsgehäuse, auch im Betrieb der Vorrichtung, permanent mit der Umgebung derart in Verbindung steht, dass in dem anderen Medienraum Umgebungsdruck herrscht.

Weitere Ausdehnungsvorrichtungen gehen aus der EP 0 790 411 A1, der EP 1 582 820 A2, der US 2019/0085536 A1 und der EP 3 351 860 A1 hervor.

Ausgehend von diesem Stand der Technik liegt der Erfindung die Aufgabe zugrunde, die bekannten Lösungen dahingehend weiter zu verbessern, dass sie nicht länger den restriktiven Vorgaben der Druckgeräterichtlinie respektive der Druckbehälterverordnung mit ihren gesetzlich vorgeschriebenen Inspektionsintervallen unterliegen.

Eine dahingehende Aufgabe löst eine Ausdehnungsvorrichtung mit den Merkmalen des Patentanspruches 1 in seiner Gesamtheit.

Gemäß dem Kennzeichen von Anspruch 1 ist vorgesehen, dass ein Luftfilter vorgesehen ist, und dass die zumindest eine Öffnung im Ausdehnungsgehäuse für den Luftdurchtritt der Aufnahme des Luftfilters dient. Dergestalt kann die in das Ausdehnungsgehäuse einströmende Luftmenge von Partikelverschmutzung abgereinigt werden. Bei entsprechender Ausgestaltung ist der Luftfilter auch in der Lage, in üblicher Weise Feuchtigkeitsbestandteile aus der Umgebungsluft abzutrennen.

Der Ausdehnungsvorrichtung liegt die Erkenntnis zugrunde, dass für eine Vielzahl von Anwendungsfällen dahingehende Ausdehnungsvorrichtungen nur mehr oder minder drucklos ein Pendelvolumen an Flüssigkeit auszugleichen brauchen, wozu es keiner hochdruckfesten Gefäße bedarf mit eingeschlossenen Gasvolumina vorgebbaren Druckes, der regelmäßig über dem Grenzwert von 0,5 bar nach der Druckgeräterichtlinie respektive der Druckbehälterverordnung liegt.

Demgemäß ist vorgesehen, dass der andere Medienraum über mindestens eine Öffnung im Ausdehnungsgehäuse, auch im Betrieb der Vorrichtung, permanent mit der Umgebung derart in Verbindung steht, dass in dem anderen Medienraum Umgebungsdruck herrscht. Demgemäß kann in den einen Medienraum des Ausdehnungsgehäuses nach wie vor Flüssigkeit mit vorgebbarem Druck und vorgebbarem Volumen einströmen mit der Folge, dass sich die elastische Trennmembran in Richtung des anderen Medienraumes vorwölbt und dabei die Umgebungsluft aus diesem anderen Medienraum über die jeweilige Öffnung im Ausdehnungsgehäuse nach außen hin verdrängt. Wird das Pendelvolumen an Flüssigkeit aus dem einen Medienraum des Gefäßes dann wieder abgerufen, entspannt sich die Membran erneut und gelangt in ihren Ausgangszustand zurück, wobei dann über die jeweilige Umgebungsöffnung zwecks Ausgleich wieder Luft in den anderen Medienraum "nachgesaugt" wird. Mit der erfindungsgemäßen Ausdehnungsvorrichtung ist es demgemäß möglich, für eine Vielzahl von Anwendungsfällen, wo auf der Flüssigkeitsseite nur ein vorgebbares Pendelvolumen auszugleichen ist, diese einzusetzen, ohne die stringenten Bestimmungen auf dem Gebiet ständig druckbeaufschlagter Behältnisse mit Arbeitsdrücken größer 0,5 bar einhalten zu müssen.

Die erfindungsgemäße Ausdehnungsvorrichtung ist insbesondere geeignet zum Anschluss an Fluidkreisläufe jedweder Art, insbesondere in Form von Hydraulikkreisläufen. In Luftfahrzeugen kann sich aufgrund der weiten Spanne an Betriebstemperaturen von -56 bis+40 °C (ISA-Temperatur) das in hydraulischen Arbeitskreisen grundsätzlich eingeschlossene Hydrauliköl ausdehnen oder zusammenziehen und das hieraus im Hydraulikkreislauf entstehende Pendelvolumen kann mit der erfindungsgemäßen Ausdehnungsvorrichtung mit geringem konstruktivem Aufwand funktionssicher ausgeglichen werden. Dies hat so keine Entsprechung im Stand der Technik.

Bei einer bevorzugten Ausführungsform der erfindungsgemäßen Ausdehnungsvorrichtung ist vorgesehen, dass der Flüssigkeitsanschluss und die zumindest eine Öffnung für den Durchtritt der Umgebungsluft in den anderen Medienraum auf gegenüberliegenden Stirnseiten des Ausdehnungsgehäuses angeordnet sind. Dergestalt ist im Wesentlichen eine vertikale Ausrichtung für das Ausdehnungsgehäuse im Rahmen seines Betriebes vorgegeben und das aufzunehmende Pendelvolumen kann unter der Wirkung der Schwerkraft zwanglos in den einen Medienraum ein- und austreten. Dadurch, dass zuoberst die Luft-Öffnung im Ausdehnungsgehäuse angeordnet ist, ergeben sich besonders gute Strömungsverhältnisse beim Ein- und Austritt der Luft in den anderen Medienraum, dessen jeweiliges Volumen über die Ausdehnungsgröße der elastischen Trennmembran vorgegeben ist, die insoweit dem Pendelvolumen auf der Flüssigkeitsseite ausgesetzt ist.

Bei einer weiteren besonders bevorzugten Ausführungsform der erfindungsgemäßen Ausdehnungsvorrichtung besteht das Ausdehnungsgehäuse aus zwei schalenartigen Gehäuseteilen, die miteinander verklebt sind und aus Kunststoffmaterialien bestehen, beispielsweise aus üblichen Verbundwerkstoffen. Da das gefäßartige Ausdehnungsgehäuse keinen hohen Drücken ausgesetzt ist, insbesondere nur dem Umgebungsdruck unterliegt, ist eine Ausgestaltung in Leichtbauweise aus Kunststoff ermöglicht.

Bei einer weiteren bevorzugten Ausführungsform der erfindungsgemäßen Ausdehnungsvorrichtung ist vorgesehen, dass das eine Gehäuseteil mit der jeweiligen Öffnung das andere Gehäuseteil mit dem Flüssigkeitsanschluss übergreift und dass im Bereich des Übergriffes auf der Innenumfangsseite des anderen Gehäuseteiles mit der Flüssigkeitsöffnung ein Haltering eingesetzt ist, der die Membran in eine ringförmige Ausnehmung des anderen Gehäuseteils drückt. Dergestalt ist eine dichte Verbindung zwischen den Gehäuseteilen erreicht und ohne zusätzliche Festlegemittel wird die Membran mittels des Halteringes im Ausdehnungsgehäuse randseitig definiert festgelegt. Vorzugsweise springt dabei das eine Gehäuseteil mit der Öffnung im Bereich des Halteringes nach innen vor und übergreift dergestalt das andere Gehäuseteil sowie den Haltering, was in Verbindung mit dem schalenartigen Aufbau der Gehäuseteile dennoch eine druckstabile Ausgestaltung des Ausdehnungsgehäuses ergibt.

Bei einer weiteren bevorzugten Ausführungsform der erfindungsgemäßen Ausdehnungsvorrichtung ist vorgesehen, dass an der Stelle des Übergriffes ein axialer Spalt zwischen dem anderen Gehäuseteil mit dem Haltering und dem einen Gehäuseteil vorhanden ist. Dergestalt ist eine Art Toleranzausgleich geschaffen, so dass in jedem Fall ein sicherer Einbau des Halteringes mit der Membran in die Schalenanordnung der Gehäuseteile ermöglicht ist.

Vorzugsweise besteht die Membran aus einem schalenartigen Elastomerkörper, der bodenseitig ein Schließteil aufweist zum Verschließen des Flüssigkeitsanschlusses bei vollständig entleertem Gehäuseteil auf seiner Flüssigkeitsseite. Dergestalt gelangt die Membran zwanglos in ihre Schließstellung und die Flüssigkeit kann vollständig aus dem anderen Gehäuseteil entleert werden.

Bei einer bevorzugten Ausführungsform der erfindungsgemäßen Ausdehnungsvorrichtung ist ferner vorgesehen, dass die Trennmembran eine wulstartige Verdickung aufweist, die mit einer radial vorspringenden Lippe in einen zugeordneten Ringspalt im anderen Gehäuseteil eingreift. Dergestalt ist eine zusätzliche Festlegemöglichkeit für das randseitige Ende der Membran in dem anderen Gehäuseteil erreicht.

Bei einer weiteren bevorzugten Ausführungsform der erfindungsgemäßen Ausdehnungsvorrichtung ist vorgesehen, dass der Flüssigkeitsanschluss im anderen Gehäuseteil zwei Anschlussteile aufweist, die den Flüssigkeitsanschluss durchgreifen und gegeneinander festgelegt zwischen sich das andere Gehäuseteil an einem Randbereich zum Flüssigkeitsanschluss einspannen. Dergestalt ist das gegebenenfalls glasfaserverstärkte andere Gehäuseteil sicher von den metallischen Werkstoffen der Anschlussteile durchgriffen, so dass trotz der Leichtbauweise für das Gehäuse, an sich eine robuste Anschlussmöglichkeit für hydraulische Kreisläufe mit ihren normierten Anschlussgeometrien geschaffen ist.

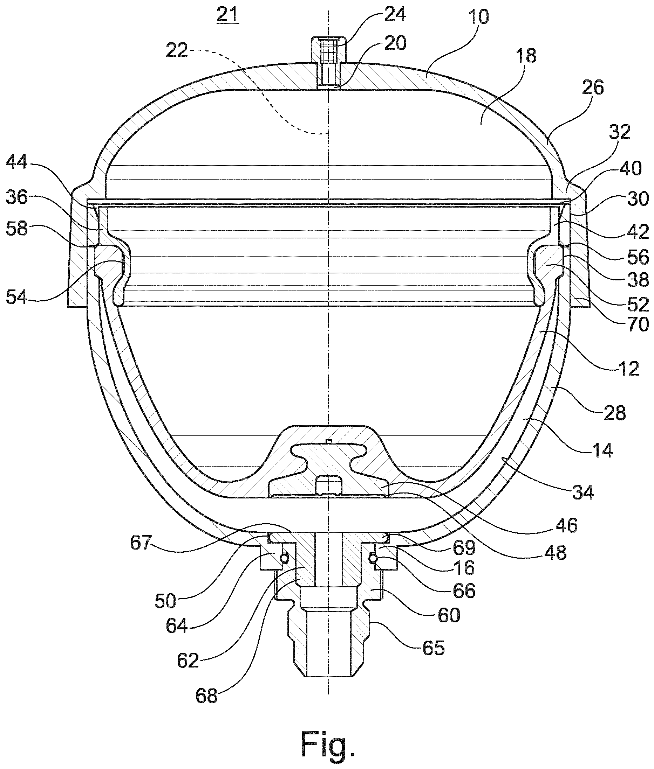

Im Folgenden wird die erfindungsgemäße Ausdehnungsvorrichtung anhand eines Ausführungsbeispiels nach der Zeichnung näher erläutert, die in der einzigen Figur in der Art eines Längsschnittes die wesentlichen Komponenten der Ausdehnungsvorrichtung zeigt.

Die Ausdehnungsvorrichtung nach der Figur weist ein Ausdehnungsgehäuse 10 auf mit einer darin angeordneten Trennwand in Form einer elastischen Trennmembran 12. Die Trennmembran 12 trennt das Gehäuse 10 in seinem Inneren in einen Medienraum 14, der über einen Flüssigkeitsanschluss 16 mit Flüssigkeit befüllbar ist, beispielsweise in Form eines Hydrauliköls. Über den dahingehenden Flüssigkeitsanschluss 16, der in üblicher Weise an eine nicht näher dargestellte hydraulische Versorgungseinrichtung angeschlossen ist, lässt sich im Bedarfsfall auch wieder Flüssigkeit aus dem Medienraum 14 abführen. In Blickrichtung auf die Figur gesehen, ist oberhalb der Trennmembran 12 ein anderer zweiter Medienraum 18 angeordnet, der über eine Öffnung 20 im Ausdehnungsgehäuse 10, auch im Betrieb der Vorrichtung, permanent mit der Umgebung 21 derart in Verbindung steht, dass in dem dahingehenden anderen Medienraum 18 der Umgebungsdruck herrscht.

Wie sich des Weiteren aus der Figur ergibt, ist der Flüssigkeitsanschluss 16 sowie die Öffnung 20 für den Durchtritt der Umgebungsluft in den anderen Medienraum 18 auf gegenüberliegenden Stirnseiten des Ausdehnungsgehäuses 10 angeordnet, und zwar in koaxialer Anordnung zu einer Längsachse 22 des Ausdehnungsgehäuses 10.

Gemäß der Darstellung nach der Figur dient die Öffnung 20 im Ausdehnungsgehäuse 10 für den Luftdurchtritt der Aufnahme des Luftfilters 24. Bei einer bevorzugten Ausführungsform ist der Luftfilter 24 in der Art einer Auswechselpatrone einschraubbar in der Öffnung 20 aufgenommen. Ist der Luftfilter 24 von Partikelverschmutzung aus der Umgebungsluft zugesetzt, kann dieser dann in einfacher Weise durch einen neuen Luftfilter 24 ersetzt werden.

Das Ausdehnungsgehäuse 10 ist im Wesentlichen aus zwei schalenartigen Gehäuseteilen 26, 28 gebildet, die entlang einer vorgebbaren Klebestrecke 30 miteinander verklebt sind und aus Kunststoffmaterialien bestehen, vorzugsweise aus glasfaserverstärktem Kunststoff. Es besteht aber auch durchaus die Möglichkeit, die Gehäuseteile 26, 28 aus Aluminium-Druckgussteilen und dergleichen mehr herzustellen. Anstelle der angesprochenen Verklebung über eine Klebestrecke 30 kann auch eine andere Verbindung vorgesehen sein, beispielsweise können die beiden Gehäuseteile 26, 28 bei einer nicht näher dargestellten Ausführungsform miteinander verschraubt sein.

Das obere Gehäuseteil 26 mit der Öffnung 20 übergreift entlang eines vorspringenden Randes 32 das andere Gehäuseteil 28 mit dem Flüssigkeitsanschluss 16 und im Bereich dieses Übergriffes ist auf der Innenumfangsseite 34 des anderen Gehäuseteils 28 mit dem Flüssigkeitsanschluss 16 ein Haltering 36 eingesetzt, der die Trennmembran 12 in eine ringförmige Ausnehmung 38 des anderen Gehäuseteiles 28 drückt. An der Stelle des Übergriffes ist ein axialer Spalt in Längsausrichtung der Längsachse 22 gesehen zwischen dem anderen Gehäuseteil 28 mit dem Haltering 36 sowie dem einen Gehäuseteil 26 vorhanden. Der Haltering 36 ist an eine vorspringende Anlagefläche 42 des anderen Gehäuseteils 28 angelegt. In Blickrichtung auf die Figur gesehen, ist unterhalb der ringförmigen Anlagefläche 42 die ringförmige Ausnehmung 38 vorhanden und darüberliegend läuft die Anlagefläche 42 in einen nach außen sich erweiternden Konus 44 aus, dessen obere stirnseitige Begrenzungswand in horizontaler Richtung gesehen nach unten hin den Spalt 40 mit begrenzt.

Die Trennmembran 12 besteht aus einem schalenartigen Elastomerkörper, der bodenseitig ein Schließteil 46 aufweist zum Verschließen des Flüssigkeitsanschlusses 16 bei vollständig entleertem Gehäuseteil 28 auf seiner Flüssigkeitsseite respektive auf der Seite des einen Medienraums 14. Das Schließteil 46 ist in der Art eines massiven Ventiltellers ausgebildet und in das untere Ende des Membrankörpers der Trennmembran 12 eingeformt, insbesondere "eingeknöpft". Das tellerartige Schließteil 46 ist konzentrisch zur Längsachse 22 angeordnet und der Umfangsdurchmesser des Schließteils 46 ist jedenfalls derart gewählt, dass ein nach unten vorspringender Schließrand, der bündig mit der freien Stirnseite der Trennmembran 12 abschließt, in Anlage kommt mit einem freien umlaufenden Rand 50, der den Flüssigkeitsanschluss 16 an der gegenüberliegenden Innenseite des anderen Gehäuseteils 28 begrenzt.

Des Weiteren weist die Trennmembran 12 an ihrem äußeren freien Ende eine wulstartige Verdickung 52 auf, die nach außen hin von der ringförmigen Ausnehmung 38 und nach innen zur Längsachse 22 hin von einer konkaven Ausnehmung 54 im Haltering 36 eingefasst ist. Der Haltering 36 ist bevorzugt als elastisch nachgiebiges Kunststoff-Clipteil ausgebildet, das sich entlang der freien Öffnung des anderen Gehäuseteils 28 von oben her einsetzen und mit diesem entlang der Anlagefläche 42 über die Verdickung 52 verrasten lässt. Aufgrund der elastischen Vorspannung bildet der Haltering 36 eine Art Halteklammer für die Verdickung 52 der Trennmembran 12 aus. Für eine sichere Fixierung der Trennmembran 12 im anderen Gehäuseteil 28 ist darüberhinaus vorgesehen, dass die Verdickung 52 an ihrem oberen Ende eine radial vorspringende, dünnwandige Lippe 56 aufweist, die in einen zugeordneten Ringspalt 58 im anderen Gehäuseteil 28 bündig eingreift. Dergestalt ist auch in axialer Richtung parallel zur Längsachse 22 gesehen eine sichere Verankerung der Trennmembran 12 im anderen Gehäuseteil 28 erreicht.

Wie sich des Weiteren aus der Figur ergibt, weist der Flüssigkeitsanschluss 16 im anderen Gehäuseteil 28 zwei Anschlussteile 60, 62 auf, die den Flüssigkeitsanschluss 16 durchgreifen und gegeneinander festgelegt zwischen sich das andere Gehäuseteil 28 an einem Randbereich 64 des Flüssigkeitsanschlusses 16 einspannen. Das eine Anschlussteil 60 weist zu seiner freien Stirnseite hin ein nicht näher dargestelltes Außengewinde 65 auf, über das sich die Ausdehnungsvorrichtung als Ganzes mit dem Ausdehnungsgehäuse 10 in üblicher Weise an einen hydraulischen Versorgungskreislauf (nicht dargestellt) anschließen lässt. Außenumfangsseitig weist das eine Anschlussteil 60 einen O-Dichtring 66 auf zwecks Abdichten einer möglichen Leckagestelle von erstem Medienraum 14 zur Umgebung 21 hin. Insoweit liegt der O-Dichtring 66 in abdichtender Weise an der Innenumfangsseite des Randbereiches 64 des anderen Gehäuseteils 28 an. Von innen her ist das weitere Anschlussteil 62 als erstes eingesetzt, das mit seiner freien oberen Stirnseite eine ebene Anlagefläche 67 quer zur Längsachse 22 ausbildet für das Anlegen des Schließteiles 46, sofern der Medienraum 14 von Flüssigkeit vollständig entleert ist. Das Anschlussteil 62 weist entlang eines zylindrischen, hohlen Eingriffsstutzens ein Außengewinde 68 auf, über das das hohlzylindrische Anschlussteil 60 mit einer entsprechend ausgebildeten Innengewindestrecke auf das Anschlussteil 62 von außen her aufschraubbar ist. Sind die beiden Anschlussteile 60, 62 derart über die angegebene Gewindestrecke aneinander festgelegt, wird der Randbereich 64 zwischen den Anschlussteilen 60, 62 festgeklemmt, wofür das Anschlussteil 62 in Richtung des Schließteiles 46 eine flanschartige Verbreiterung 69 aufweist, deren Außendurchmesser dem Außendurchmesser des Randes 48 des Schließteils 46 entspricht.

Zusätzlich oder alternativ zur Klebestrecke 30 kann das obere Gehäuseteil 26 auch als Clipteil ausgebildet mit einem verbreiterten Außenrand 70 auf das untere Gehäuseteil 28 aufgeklippt werden. Dergestalt ist ein Gehäuseaufbau erreicht, der sich einfach und kostengünstig herstellen lässt und der zum Verbinden der Gehäuseteile 26, 28 aneinander auf übliche Verbindungstechniken, wie Kleben, Schrauben etc. verzichten kann und eine Clip- oder Rastverbindung ist deshalb möglich, weil im anderen Medienraum 18 über die Öffnung 20 respektive über den Luftfilter 24 nur Umgebungsdruck herrscht. In jedem Fall ragt der freie Rand der Außenwand 70 über die untere Endseite des Halteringes 36 in einer horizontalen Ebene gesehen vor. Zum Aufbringen der notwendigen Haltekräfte ist die umlaufende Außenwand 70 zu ihrem freien Ende hin im Durchmesser verbreitert.

## Patentansprüche

1. Ausdehnungsvorrichtung mit einem Ausdehnungsgehäuse (10), das eine Trennmembran (12) aufweist, die das Ausdehnungsgehäuse (10) in zwei Medienräume (14, 18) voneinander separiert, von denen ein Medienraum (14) über einen Flüssigkeitsanschluss (16) im Ausdehnungsgehäuse (10) mit Flüssigkeit befüllbar ist, wobei der andere Medienraum (18) über mindestens eine Öffnung (20) im Ausdehnungsgehäuse (10), auch im Betrieb der Vorrichtung, permanent mit der Umgebung (21) derart in Verbindung steht, dass in dem anderen Medienraum (18) Umgebungsdruck herrscht,
**dadurch gekennzeichnet,**
**dass** ein Luftfilter (24) vorgesehen ist, und
**dass** die zumindest eine Öffnung (20) im Ausdehnungsgehäuse (10) für den Luftdurchtritt der Aufnahme des Luftfilters (24) dient.

2. Ausdehnungsvorrichtung nach Anspruch 1, **dadurch gekennzeichnet, dass** der Flüssigkeitsanschluss (16) und die zumindest eine Öffnung (20) für den Durchtritt der Umgebungsluft in den anderen Medienraum (18) auf gegenüberliegenden Stirnseiten des Ausdehnungsgehäuses (10) angeordnet sind.

3. Ausdehnungsvorrichtung nach einem der vorstehenden Ansprüche, **dadurch gekennzeichnet, dass** das Ausdehnungsgehäuse (10) aus zwei schalenartigen Gehäuseteilen (26, 28) besteht, die miteinander verklebt sind und aus Kunststoffmaterialien bestehen.

4. Ausdehnungsvorrichtung nach Anspruch 3, **dadurch gekennzeichnet, dass** das eine Gehäuseteil (26) mit der jeweiligen Öffnung (20) das andere Gehäuseteil (28) mit dem Flüssigkeitsanschluss (16) übergreift und dass im Bereich des Übergriffes auf der Innenumfangsseite (34) des anderen Gehäuseteiles (28) mit dem Flüssigkeitsanschluss (16) ein Haltering (36) eingesetzt ist, der die Trennmembran (12) in eine ringförmige Ausnehmung (38) des anderen Gehäuseteils (28) drückt.

5. Ausdehnungsvorrichtung nach Anspruch 4, **dadurch gekennzeichnet, dass** das eine Gehäuseteil (26) mit der Öffnung (20) im Bereich des Halteringes (36) nach innen vorspringt und das andere Gehäuseteil (28) sowie den Haltering (36) übergreift.

6. Ausdehnungsvorrichtung nach Anspruch 5, **dadurch gekennzeichnet, dass** an der Stelle des Übergriffes ein axialer Spalt (40) zwischen dem anderen Gehäuseteil (28) mit dem Haltering (36) und dem einen Gehäuseteil (26) vorhanden ist, und dass das andere Gehäuseteil (28) sich an den Haltering (36) mit einer vorspringenden Anlagefläche (42) anlegt.

7. Ausdehnungsvorrichtung nach einem der vorstehenden Ansprüche, **dadurch gekennzeichnet, dass** die Trennmembran (12) aus einem schalenartigen Elastomerkörper besteht, der bodenseitig ein Schließteil (46) aufweist zum Verschließen des Flüssigkeitsanschlusses (16) bei vollständig entleertem Gehäuseteil (28) auf seiner Flüssigkeitsseite.

8. Ausdehnungsvorrichtung nach einem der Ansprüche 3 bis 7, **dadurch gekennzeichnet, dass** die Trennmembran (12) eine wulstartige Verdickung (52) aufweist, die mit einer radial vorspringenden Lippe (56) in einen zugeordneten Ringspalt (58) im anderen Gehäuseteil (28) eingreift.

9. Ausdehnungsvorrichtung nach einem der Ansprüche 3 bis 8, **dadurch gekennzeichnet, dass** der Flüssigkeitsanschluss (16) im anderen Gehäuseteil (28) zwei Anschlussteile (60, 62) aufweist, die den Flüssigkeitsanschluss (16) durchgreifen und gegeneinander festgelegt zwischen sich das andere Gehäuseteil (28) an einem Randbereich (64) des Flüssigkeitsanschlusses (16) einspannen.

## Claims

1. Expansion device comprising an expansion housing (10), which has a separating diaphragm (12), which separates the expansion housing (10) into two media chambers (14, 18), of which one media chamber (14) can be filled with liquid via a liquid connection (16) in the expansion housing (10), the other media chamber (18) being permanently in communication with the environment (21) via at least one opening (20) in the expansion housing (10), even during operation of the device, in such a way that ambient pressure prevails in the other media chamber (18),
**characterised in that**
an air filter (24) is provided, and
the at least one opening (20) in the expansion housing (10) for the passage of air is used to accommodate the air filter (24).

2. Expansion device according to claim 1, **characterised in that** the liquid connection (16) and the at least one opening (20) for the ambient air to pass into the other media chamber (18) are arranged on opposing end faces of the expansion housing (10).

3. Expansion device according to any of the preceding claims, **characterised in that** the expansion housing (10) consists of two shell-like housing parts (26, 28) which are bonded together and consist of plastics materials.

4. Expansion device according to claim 3, **characterised in that** the housing part (26) having the respective opening (20) engages over the other housing part (28) having the liquid connection (16), and **in that** a retaining ring (36) is inserted on the inner circumference (34) of the other housing part (28) having the liquid connection (16) in the region of the overlap, which retaining ring presses the separating diaphragm (12) into an annular recess (38) of the other housing part (28).

5. Expansion device according to claim 4, **characterised in that** the housing part (26) having the opening (20) protrudes inwards in the region of the retaining ring (36) and engages over the other housing part (28) and the retaining ring (36).

6. Expansion device according to claim 5, **characterised in that**, at the location of the overlap, an axial gap (40) is present between the other housing part (28) with the retaining ring (36) and the housing part (26), and **in that** the other housing part (28) rests on the retaining ring (36) by a protruding contact surface (42).

7. Expansion device according to any of the preceding claims, **characterised in that** the separating diaphragm (12) consists of a shell-like elastomer body which has a closing part (46) on the bottom for sealing the liquid connection (16) when the housing part (28) is completely evacuated on its liquid side.

8. Expansion device according to any of claims 3 to 7, **characterised in that** the separating diaphragm (12) has a bead-like thickening (52) which, by a radially protruding lip (56), engages in an associated annular gap (58) in the other housing part (28).

9. Expansion device according to any of claims 3 to 8, **characterised in that** the liquid connection (16) in the other housing part (28) has two connection parts (60, 62) which engage through the liquid connection (16) and, when secured together, clamp the other housing part (28) between them in an edge region (64) of the liquid connection (16).

## Revendications

1. Dispositif de détente comprenant un boîtier (10) de détente, qui a une membrane (12) de séparation, qui sépare l'un de l'autre le boîtier (10) de détente en deux espaces (14, 18) pour des fluides, dont l'un des espaces (14) pour des fluides peut être rempli de liquide par un raccord (16) pour du liquide dans le boîtier (10) de détente, dans lequel l'autre espace (18) pour des fluides communique d'une manière permanente avec l'environnement (21) par au moins une ouverture (20) dans le boîtier (10) de détente même en fonctionnement du dispositif, de manière à ce que la pression ambiante règne dans l'autre espace (18) pour des fluides,
**caractérisé**
**en ce qu'**il est prévu un filtre (24) à air, et
**en ce que** la au moins une ouverture (20) dans le boîtier (10) de détente sert, pour le passage de l'air, de logement au filtre (24) à air.

2. Dispositif de détente suivant la revendication 1, **caractérisé en ce que** le raccord (16) pour du fluide et la au moins une ouverture (20) pour le passage de l'air ambiant dans l'autre espace (18) pour des fluides sont disposés sur des côtés frontaux opposés du boîtier (10) de détente.

3. Dispositif de détente suivant l'une des revendications précédentes, **caractérisé en ce que** le boîtier (10) de détente est constitué de deux parties (26, 28) de boîtier de type en coque, qui y sont collées l'une à l'autre et qui sont en des matières plastiques.

4. Dispositif de détente suivant la revendication 3, **caractérisé en ce que** l'une des parties (26) du boîtier, ayant l'ouverture (20) respective, empiète sur l'autre partie (28) du boîtier ayant le raccord (16) pour du fluide et **en ce que**, dans la partie de l'empiètement sur le côté (34) périphérique intérieur de l'autre partie (28) du boîtier ayant le raccord (16) pour du fluide, est insérée une bague (36) de maintien, qui pousse la membrane (12) de séparation dans un évidement (38) annulaire de l'autre partie (28) du boîtier.

5. Dispositif de détente suivant la revendication 4, **caractérisé en ce que** l'une des parties (26) du boîtier, ayant une ouverture (20), fait saillie vers l'intérieur dans la partie de la bague (36) de maintien et empiète sur l'autre partie (28) du boîtier ainsi que sur la bague (36) de maintien.

6. Dispositif de détente suivant la revendication 5, **caractérisé en ce que**, sur l'emplacement de l'empiètement, il y a un intervalle (40) axial entre l'autre partie (28) du boîtier ayant la bague (36) de maintien et l'une des parties (26) du maintien, et **en ce que** l'autre partie (28) du boîtier s'applique à la bague (36) de maintien par une surface (42) d'application en saillie.

7. Dispositif de détente suivant l'une des revendications précédentes, **caractérisé en ce que** la membrane (12) de séparation est en un corps élastomère du type coque, qui a du côté du fond une partie (46) de fermeture pour la fermeture du raccord (16) pour du liquide, lorsque la partie (28) du boîtier est vidée complètement sur son côté pour du liquide.

8. Dispositif de détente suivant l'une des revendications 3 à 7, **caractérisé en ce que** la membrane (12) de séparation a un épaississement (52) de type bourrelet, qui, par une lèvre (56) en saillie radialement, pénètre dans un intervalle (58) annulaire associé de l'autre partie (28) du boîtier.

9. Dispositif de détente suivant l'une des revendications 3 à 8, **caractérisé en ce que** le raccord (16) pour du liquide dans l'autre partie (28) du boîtier a deux parties (60, 62) de raccord, qui traversent le raccord (16) pour du liquide et, fixées l'une par rapport à l'autre, bloquent entre elles l'autre partie (28) du boîtier sur une zone (64) de bord du raccord (16) pour du liquide.
